Europäisches Patentamt

European Patent Office

Office européen des brevets

(11) Veröffentlichungsnummer: **0 215 390**
**A2**

(12) # EUROPÄISCHE PATENTANMELDUNG

(21) Anmeldenummer: 86112264.6

(22) Anmeldetag: 04.09.86

(51) Int. Cl.⁴: **C 02 F 1/66**

(30) Priorität: 12.09.85 DE 3532552

(43) Veröffentlichungstag der Anmeldung: **25.03.87**
**Patentblatt 87/13**

(84) Benannte Vertragsstaaten: **AT BE CH DE FR GB IT LI NL**

(71) Anmelder: **Henkel Kommanditgesellschaft auf Aktien, Postfach 1100 Henkelstrasse 67, D-4000 Düsseldorf-Holthausen (DE)**

(72) Erfinder: **Rings, Friedel, Ullrich-von-Hassel-Strasse 12, D-4019 Monheim 2 (DE)**
Erfinder: **Altenschöpfer, Theodor, Dr., Einsteinstrasse 3, D-4000 Düsseldorf (DE)**

(54) **Verfahren zum Einstellen eines pH-Bereichs im Abwasser und Einrichtung zum Durchführen des Verfahrens.**

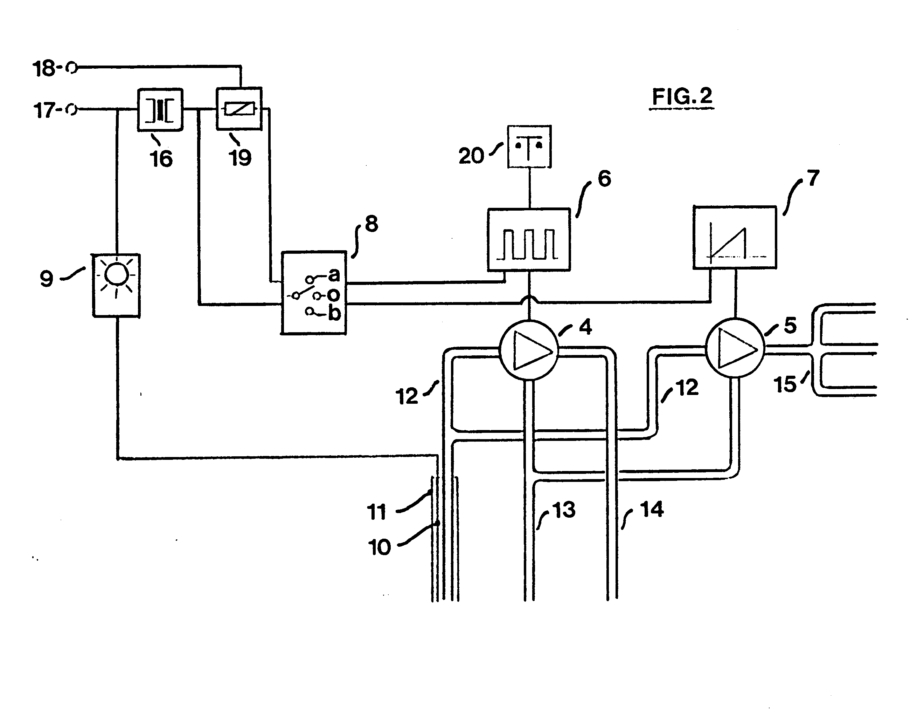

(57) Zum Einstellen eines vorgegebenen pH-Bereichs im alkalischen Abwasser einer gewerblichen Spül- oder Waschmaschine wird dem Abwasser als Säurelösung eine in den pH-Bereich eine Schulter in der Neutralisationskurve aufweisende Pufferlösung, vorzugsweise auf Basis Phosphorsäure mit Ammoniumhydrogenphosphat, in einer zur Reiniger- und Abwassermenge proportionalen Menge zugegeben (Fig. 2).

EP 0 215 390 A2

4000 Düsseldorf, den 10. 9. 1985
Henkel str. 67

0215390
Henkel KGaA
TFP / Patentabteilung
Bor/C

-1-

P a t e n t a n m e l d u n g
D 7334 EP

"Verfahren zum Einstellen eines pH-Bereichs im Abwasser und Einrichtung zum Durchführen des Verfahrens"

Die Erfindung betrifft ein Verfahren zum Einstellen
eines vorgegebenen pH-Bereichs, insbesondere zwischen
pH 6,5 und 10,o, im alkalischen Abwasser einer gewerblichen Spül- oder Waschmaschine durch Zugabe einer Säurelösung. Sie betrifft ferner eine Einrichtung zum Durchführen des Verfahrens.

Kommunale Abwasserbestimmungen fordern unter anderem
das Einhalten eines bestimmten pH-Bereichs im Abwasser. Spül- und Waschmittel verursachen häufig zu
hohe pH-Werte im Abwasser an der Einleitstelle in
das öffentliche Kanalnetz. Abwässer außerhalb eines
Bereiches von pH 6,5 bis 10,o, in speziellen Fällen
zwischen pH 6,5 und 9,5 oder nur bis 9,0 werden von
den Behörden beanstandet. Verursacher von ständigen
oder gelegentlichen Überschreitungen des zugelassenen pH-Bereichs sind unter anderem gewerbliche Spül-
und Waschautomaten. Bei ungenügender Dimensionierung
des Vorlaufbeckens bzw. bei generell fehlendem oder
mangelndem zusätzlichem Abwasser gelangt das alkalische Abwasser aus den Maschinen mehr oder weniger
unverdünnt zur Einleitstelle in das öffentliche
Kanalnetz. Abwässer dieser Art müssen gezielt behandelt werden.

...

D 7334 EP                    2

Konventionelle Abwasserneutralisationsanlagen arbeiten auf der Grundlage der Neutralisation einer vorgegebenen Menge Abwasser mit Salzsäure (Rührbehälter). Dieser Vorgang ist regelungstechnisch nur über trägheitsarme pH-Regelsysteme beherrschbar, da im angestrebten Neutralbereich vergleichsweise kleine Salzsäuremengen erhebliche pH-Verschiebungen bewirken.

Nachteilig ist der große apparative Aufwand sowie der große Platzbedarf solcher Anlagen. Auch ist das Hantieren mit konzentrierter Salzsäure, z.B. bei Gebindewechsel, bekanntlich sehr gefährlich. Nicht unterzubewerten ist zudem die fragliche Sicherheit, die dem Betreiber durch den exakt eingestellten pH-Wert suggeriert wird. Wird nämlich ein solcherart aufbereitetes Abwasser vor Erreichen der Einleitstelle ins öffentliche Kanalnetz mit vergleichsweise geringen Alkali- oder Säurenmengen belastet, tritt zwangsläufig - da keine Pufferwirkung vorhanden ist - eine mehr oder weniger starke pH-Verschiebung statt, die alle vorherigen Anstrengungen zunichte macht. Diese zusätzlichen Alkali- oder Säuremengen können z.B. über hinter der Neutralisationsanlage einmündende Abwasserleitungen eingebracht werden.

Der Erfindung liegt die Aufgabe zugrunde, ein Verfahren zum Einstellen des zulässigen pH-Bereichs von Abwasser zu schaffen, bei dem eine Säurelösung proportional zur im Abwasser enthaltenen Reinigungsmittelmenge und kontinuierlich direkt in den Überlauf zum Kanal oder portionsweise in die Tanks der jeweiligen Wasch- oder Spülmaschine einzudosieren ist. Die erfindungsgemäße Lösung besteht für das Verfahren eingangs genannter Art darin, daß als

D 7334 EP                    3

Säurelösung eine in dem vorgegebenen pH-Bereich eine
Schulter in der Neutralisationskurve aufweisende
Pufferlösung in einer zur Spül- bzw. Waschmittelkonzentration und Abwassermenge proportionalen Menge
in das Abwasser eindosiert wird.

Das der Erfindung zugrunde liegende Problem wird
durch die Pufferwirkung der eingesetzten Lösung
ganz wesentlich entschärft. Dabei kommen für das
erfindungsgemäße Verfahren zwei Alternativen in
Frage: Im einem Fall wird die Pufferlösung während
des Betriebes der Spül- und Waschmaschine kontinuierlich, insbesondere mit Intervallsteuerung, vorzugsweise mit Hilfe einer Schlauchquetschpumpe in
den Kanal eindosiert. Im anderen Fall wird die Pufferlösung bei Spül- bzw. Waschstop bzw. jeweils kurz
vor dem Ablassen der Spül- bzw. Waschmaschinentanks
portionsweise in einer der Spül- bzw. Waschmittelkonzentration und den Tankinhalten proportionalen
Menge, insbesondere mit Hilfe einer zeit-mengen-
gesteuerten Schlauchquetschpumpe, in die Tanks eindosiert.

Eine nach dem erfindungsgemäßen Verfahren arbeitende
pH-Pufferungsanlage soll beide vorgenannte Funktionen
erfüllen, um sowohl den pH-Wert des abfließenden
Abwassers der jeweiligen Maschine als auch - kurz vor
dem Ablassen - den pH-Wert der Tankinhalte auf den
zulässigen pH-Bereich von 6,5 bis 10,0 bzw. 9,0 abzusenken. Hierzu sind zwei Grundfunktionen der Anlage
erforderlich, nämlich alternativ eine kontinuierliche
Förderung der Pufferlösung in einer von der Reinigerart und -konzentration sowie der Wassernachspülung
abhängigen Menge direkt in den Kanal über eine inter-

...

7334 EP                    4

vallgesteuerte Pumpe; oder bei Spülstop, das heißt
kurz vor Ablassen der Tankinhalte, eine Dosierung
in einer der Reinigerkonzentration und den Tankinhalten proportionalen Menge Pufferlösung über eine
zeit-mengen-gesteuerte Pumpe in die Tanks der Spül-
bzw. Waschmaschine. Für die Pufferungsanlage sind
außer den beiden Pumpen und einer Ansteuerungselektronik mit Betriebsartenschalter für die Wahl
zwischen einer Steuerung nach Intervall oder Zeit/
Menge sowie den üblichen Leitungen und Anschlüssen
keine nennenswerten Investitionen erforderlich. Die
erfindungsgemäße Anlage erfordert daher nicht nur
geringen Aufwand sondern ist auch platzsparend und
einfach zu installieren.

Ein wesentliches Merkmal der Erfindung ist die Verwendung einer im zulässigen pH-Bereich eine Schulter
in der Neutralisationskurve aufweisenden Pufferlösung,
zum Einstellen bzw. Einhalten eines bestimmten pH-
Bereichs im Abwasser an der Einleitstelle in das öffentliche Kanalnetz. Um in die anzustrebende pH-Wertspanne
von 6,5 bis 10,0 bzw. 9,0 zu gelangen, wird als Grundkomponente Phosphorsäure eingesetzt. Phosphorsäure
besitzt bekanntlich im pH-Bereich 6 bis 7 eine Schulter in der Neutralisationskurve; es wird das zweite
von insgesamt drei H-Ionen neutralisiert. Gemäß weiterer Erfindung kann diese Schulter erheblich ausgeweitet werden,wenn als weiterer Rezepturbestandteil
Ammoniumhydrogenphosphat eingesetzt wird.

Wegen der außerordentlich breiten Schulter einer
erfindungsgemäßen Pufferlösung bedeutet dies, daß
- ganz im Gegensatz zur Neutralisation mit Hilfe von
Salzsäure - nur eine ungefähr entsprechende Menge

...

D 7334 EP                         5

Pufferlösung zu einer gegebenen Menge Spül- bzw.
Waschmittel gegeben zu werden braucht, um sicher
in das zulässige pH-Intervall von 6,5 bis 10,0 bzw.
9,0 zu gelangen. Die zulässige Fehlerbreite, das
heißt die Abweichung von der optimalen Pufferlösungsmenge, beträgt bei einer erfindungsgemäßen aus
Phosphorsäure und Ammoniumhydrogenphosphat bestehenden
Pufferlösung bis zu ± 50 % und erlaubt daher eine
proportionale Zugabe zum Abwasser entweder kontinuierlich direkt in den Kanal während des Betriebs
der Maschine oder portionsweise in die Maschinentanks kurz vor dem Ablassen der Tanks.

D 7334 EP                6

Anhand der schematischen Zeichnung der beiliegenden
Figuren werden Einzelheiten der Erfindung erläutert.
Es zeigen:

    Fig. 1   Neutralisations- bzw. Pufferungskurven
            für verschiedene Säurelösungen;

    Fig. 2   ein Blockschaltbild einer pH-Pufferungsanlage; und

    Fig. 3   Pufferungskurven für verschiedene Reinigerkonzentrationen.

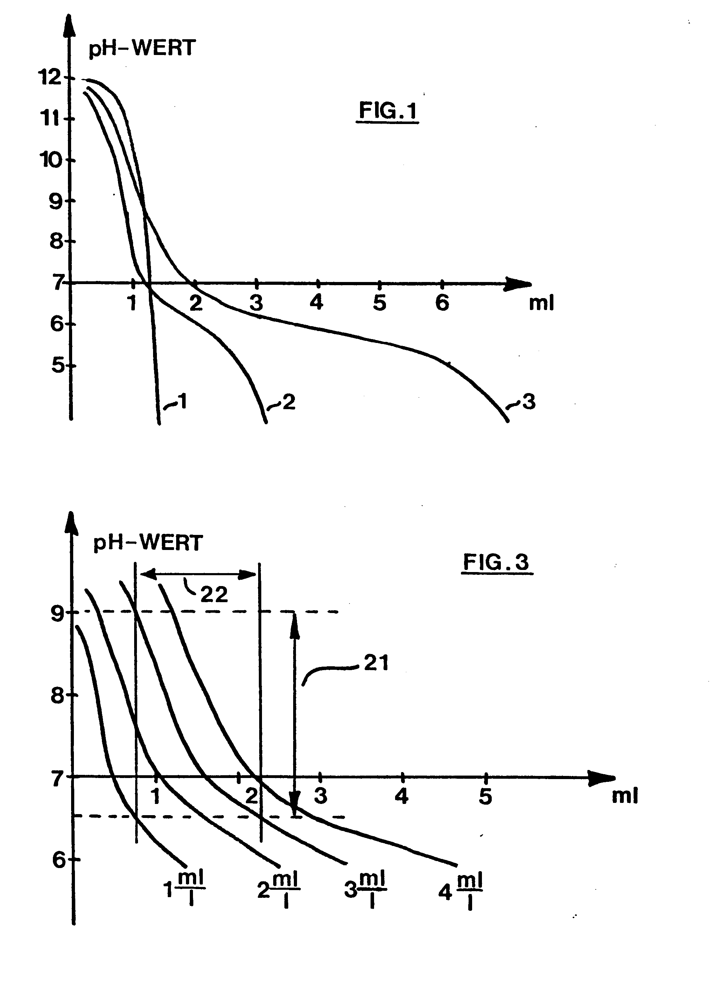

In dem Diagramm von Fig. 1 wird in der Abzisse die
Menge der zugegebenen Säure- bzw. Pufferlösung in
ml und in der Ordinate der pH-Wert des Abwassers
angegeben. Von den drei Kurven nach Fig. 1 entspricht
die Kurve 1 der Zugabe von konzentrierter Salzsäure,
die Kurve 2 der Zugabe von 50%iger Phosphorsäure und
die Kurve 3 der Zugabe von einer Pufferlösung auf
Basis Phosphorsäure mit Ammoniumhydrogenphosphat.
Während der pH-Wert insbesondere auch in den vorliegenden Zusammenhang wesentlichen Bereich von 6,5
bis 9,0 bei Zugabe von konzentrierter Salzsäure
außerordentlich stark von der Zugabemenge abhängt,
besitzt die Neutralisationskurve 2 mit Zugabe von
Phosphorsäure, eine Schulter in dem vorgeschriebenen
pH-Bereich, so daß Abweichungen der Zugabemenge
keinen so starken Einfluß auf den pH-Wert haben.
Besonders stark wird die Schulter ausgeweitet, wenn
nach Kurve 3 eine Ammoniumhydrogenphosphat enthaltende Phosphorsäure-Pufferlösung verwendet wird.
Ersichtlich wird der zulässige pH-Bereich von 6,5
bis 9,0 noch eingehalten, wenn die Menge der Puffer-

...

D 7334 EP                    7

lösung gemäß Kurve 3 um bis zu ± 50 % von einem
Mittelwert abweicht. Bei Verwendung einer solchen
Pufferlösung genügt es also, die Menge der Pufferlösung nur ungefähr einzustellen und es kann eine
der Reinigerart und -konznetration sowie Nachspülwassermenge proportionale Menge an Pufferlösung in
das Abwasser eindosiert werden, so daß aufwendige
Neutralisationsverfahren mit pH-Regelung und Salzsäurezugabe entfallen.

D 7334 EP                    8

Versuchsbeispiel

Im Verlauf der Rezepturoptimierung, die den möglichst sparsamen Einsatz dieses Mittels bei gleichzeitig großer Sicherheit durch starken Puffereffekt zum Ziel hatte, bewährte sich folgende Zusammensetzung einer sauren Pufferlösung am besten:

Rezeptur 1

| | |
|---|---|
| Phosphorsäure (100%ig) | 17,75 % |
| Ammoniumdihydrogenphosphat | 11,85 % |
| Ammoniummonohydrogenphosphat | 1,51 % |
| Wasser | 68,89 % |
| | 100,00 % |

Zur Erzeugung dieser Zusammensetzung kann unter erheblichen Kosteneinsparung von den technischen Rohstoffen Phosphorsäure und Ammoniaklösung ausgegangen werden. Die entsprechende Ansatzrezeptur lautet:

Rezeptur 2

| | |
|---|---|
| Phosphorsäure techn. 75%ig | 53,3 % |
| Ammoniaklösung techn. 25%ig | 16,0 % |
| Wasser | 30,7 % |
| | 100,0 % |

Über Gleichgewichtseinstellung beim vorgegebenen pH-Wert von 1,8 (Rez. 1 = Rez. 2) ergibt sich das in Rez. 1 angegebene Gewichtsverhältnis von Di - zu Monohydrogenphosphat automatisch.

Die Aufbereitung der pH-Pufferlösung nach Rez. 2 hat

...

D 7334 EP                    9

hat unter entsprechenden Vorsichtsmaßnahmen zu erfolgen,
da die Bildungsreaktion stark exotherm verläuft. Vorteilhafterweise geht man so vor, daß man die Phosphorsäure in Wasser gelöst vorlegt und die Ammoniaklösung
unter intensiver Rührung und Kühlung langsam zulaufen
läßt.

Für Versuchszwecke hat es sich als vorteilhaft erwiesen,
die pH-Pufferlösung einzufärben, da auf diese Weise
leichter feststellbar ist, ob die (transparenten)
Schlauchleitungen und das Vorratsgebinde gefüllt
sind. Es wurde der im sauren beständige Farbstoff
Alizarincyaningrün in 0,001%iger Konzentration eingesetzt.

Gemäß Fig. 2 besteht eine erfindungsgemäße Pufferungsanlage aus einer intervallgesteuerten Schlauchquetschpumpe 4 für eine kontinuierliche Förderung von Pufferlösung und einer zeit-mengen-gesteuerten Schlauchquetschpumpe 5 zum portionsweisen Zugeben von Pufferlösung in die Tanks der Spül- bzw. Waschmaschine.
Außer den beiden Pumpen 4 und 5 soll die pH-Pufferanlage eine Ansteuerungselektronik für jede Pumpe,
nämlich eine Impulssteuerung 6 für die Pumpe 4 und
eine zeit-mengen-Steuerung 7 für die Pumpe 5, einen
Betriebsartenwahlschalter 8, eine Leerstandsanzeige
9 für die eingesetzte Pufferlösung mit Sonde 10 für
eine Sauglanze 11, den Pumpen zugeordnete Ansaugleitungen 12 zur Sauglanze 11, Leckageableitungen 13
und Förderleitungen 14 und 15 zum Kanal bzw. zu den
Maschinentanks enthalten. Es hat sich als zweckmäßig
erwiesen, für die Leitungen transparente Schläuche,
insbesondere aus PVC zu verwenden.

...

D 7334 EP                10

Im angegebenen Beispiel erhalten die Pumpenansteuerungen 6, 7 ihre Betriebsspannung über einen Transformator 16 aus dem Netz 17. Die Betriebsspannungszuführung für die Intervallsteuerung 6 führt über
ein Relais 19, welches über den Steuerungsspannungsanschluß 18 von z.B. der Nachspülung bzw. dem Frischwasserzufluß aktiviert wird. Somit ist sichergestellt,
daß die kontinuierliche Dosierung von Pufferlösung
in den Kanal nur während der Betriebszeiten der Spül-
oder Waschmaschine erfolgt.

In einem Ausführungsbeispiel wird die Schaltung so
ausgeführt, daß mit Einschalten der Nachspülung die
Pumpe 4 der Anlage funktionsbereit ist. Bei Stellung
des Wahlschalters 8 auf a startet die Pumpe 4 im Intervallbetrieb. Für die volle Leistung der Pumpe 4
kann der an der Impulssteuerung 6 vorgesehene Taster
20 gedrückt werden. Die Pumpe 4 dient dazu, daß Abwasser bei kontinuierlichem Betrieb der jeweiligen
Maschine in der gewünschten Weise zu neutralisieren.
Bei Spülende müssen die Tankinhalte der Maschine gesondert behandelt werden. Hierzu wird der Wahlschalter
8 auf Stellung b umgelegt, so daß die Pumpe 5 für eine
vorgewählte Zeit läuft. Die Betriebszeit kann durch
Aufleuchten einer Lampe angezeigt werden. Bei Stellung
0 des Wahlschalters 8 sind beide Pumpen 4, 5 abgeschaltet.

Bei einer Störungsmeldung durch die Leerstandsanzeige
9 wird die in das Abwasser einzudosierende pH-Pufferlösung ergänzt. War die zur Sauglanze 11 führende Ansaugleitung 12 bereits leergepumpt, wird zum Überbrücken der Impulssteuerung 6 die Taste 20 gedrückt.
Die Pumpe 4 geht während dieser Zeit auf volle Leis-

...

tung und die Ansaugleitung 12 wird schnell gefüllt.

Zur Einstellung der jeweiligen Fördermengen der Pumpen 4 und 5 muß zuvor die erforderliche Menge an pH-Pufferlösung bekannt sein. Wie bereits erwähnt, richtet sich diese nach der Art und Konzentration des Spül- oder Waschmittels sowie nach der Abwassermenge, wobei die Abwassermenge gleich der zulaufenden Frischwassermenge ist.

Für jedes Spül- bzw. Waschmittel kann ein Diagramm entsprechend Fig. 3 aufgestellt werden. Fig. 3 enthält eine Kurvenschar für verschiedene Konzentrationen der Reinigerlösung im eingesetzten Klarwasser. Es werden in Fig. 3 vier verschiedene Konzentrationen von 1 ml/l, 2 ml/l, 3 ml/l, 4 ml/l vorgesehen. Die Werte auf der Abszisse und Ordinate entsprechen denjenigen von Fig. 1. In Fig. 3 wird außerdem die zulässige pH-Spanne 21 angedeutet. Beispielsweise für die Konzentration 3 Milliliter Reiniger/Liter Klarwasser kann die eingesetzte Menge an Pufferlösung zwischen 0,75 und 2,25 ml schwanken, der Mittelwert liegt bei 1,5 ml. Man erhält also den pH-Wert 7,15 bei Zugabe von 1,5 ml Pufferlösung pro Liter Flotte als Optimalwert; hiervon kann die zugegebene Menge an Pufferlösung innerhalb des sogenannten Pufferbereichs 22 nach oben und unten um 50 % abweichen, ohne das die zulässige pH-Spanne 21 verlassen würde.

D 7334 EP          12

P a t e n t a n s p r ü c h e

1. Verfahren zum Einstellen eines vorgegebenen pH-
Bereichs, insbesondere zwischen pH 6,5 und 10,0 ,
im alkalischen Abwasser einer gewerblichen Spül-
oder Waschmaschine durch Zugabe einer Säurelösung,
dadurch gekennzeichnet, daß als Säurelösung eine in
dem vorgegebenen pH-Bereich eine Schulter in der Neutralisationskurve aufweisende Pufferlösung in einer
zur Spül- bzw. Waschmittelkonzentration und Abwassermenge proportionalen Menge in das Abwasser eindosiert
wird.

2. Verfahren nach Anspruch 1, dadurch gekennzeichnet,
daß die Pufferlösung während des Betriebs der Spül-
oder Waschmaschine kontinuierlich, insbesondere mit
Intervallsteuerung, vorzugsweise mit Hilfe einer
Schlauchquetschpumpe, in den Überlauf der Maschine
zum Abwasserkanal eindosiert wird.

3. Verfahren nach Anspruch 1, dadurch gekennzeichnet,
daß die Pufferlösung bei Spül- bzw. Waschstop bzw.
jeweils kurz vor dem Ablassen der Spül- oder Waschmaschinentanks portionsweise in einer der Spül- bzw.
Waschmittelkonzentration und den Tankinhalten proportionalen Menge, insbesondere mit Hilfe einer zeit-mengen-gesteuerten Schlauchquetschpumpe, die in die Tanks
eindosiert wird.

4. Verfahren nach einem oder mehreren der Ansprüche
1 bis 3, dadurch gekennzeichnet, daß als Pufferlösung
eine phosphorsaure Ammoniumhydrogenphosphatlösung eingesetzt wird.

...

D 7334 EP                    13

5. Einrichtung zum Durchführen des Verfahrens nach einem oder mehreren der Ansprüche 1 bis 4, gekennzeichnet durch zwei wahlweise einzuschaltende Pumpen (4, 5) mit gemeinsamer Ansauglanze (11) zu einem Reservoir der Pufferlösung und einer gemeinsamen Leckageableitung (13), nämlich eine intervallgesteuerte Pumpe (4) mit Abfluß zum Kanal und einer zeit-mengen-gesteuerten Pumpe (5) mit Abfluß zu den Maschinentanks, und durch einen gemeinsamen Steuereingang für das Inbetriebsetzen der Pumpe (4) in Abhängigkeit vom Einsetzen einer Nachspülung (18), insbesondere eines Frischwasserzuflusses.

6. Einrichtung nach Anspruch 5, gekennzeichnet durch eine dem Reservoir der Pufferlösung zugeordnete Sonde (10) mit Leerstandsanzeige (9).

D 7334 EP

Bezugszeichenliste

1  =  konzentrierte Salzsäure

2  =  50 %ige Phosphorsäure

3  =  pH-Pufferlösung

4  =  Pumpe

5  =  Pumpe

6  =  Impulssteuerung

7  =  Zeit-Mengen-Steuerung

8  =  Wahlschalter

9  =  Leerstandsanzeige

10  =  Sonde

11  =  Sauglanze

12  =  Ansaugleitung

13  =  Leckageableitung

14  =  Förderleitung zum Überlauf in den Kanal

15  =  Förderleitung zu den Tanks

16  =  Transformator

17  =  Netzanschluß

18  =  Steuerspannungsanschluß

19  =  Relais

20  =  Taster

21  =  zulässige pH-Spanne

22  =  Pufferspanne

FIG.1

FIG.3

FIG.2